# EUROPEAN PATENT APPLICATION

(11) **EP 0 854 085 A1**
(43) Date of publication of application: **22.07.1998**
(21) Application number: 97202927.6
(22) Date of filing: 25.09.1997
(51) Int. Cl.: B65B 19/34, A24C 5/32, B65G 47/84

(54) **Rotating feed apparatus for rod-like articles**

(30) Priority: 26.09.1996 CA 2186552
(71) Applicant: Kastner, Arnold, Montreal Quebec H1H 3N5 (CA)
(72) Inventor: Kastner, Arnold, Montreal Quebec H1H 3N5 (CA)
(74) Representative: Lucas, Brian Ronald

(57) **Abstract**

A feed device for feeding rod-like articles, such as filter tipped cigarette tubes, from an axially moving feed supply (20) to a conveyor (22) moving normal to the axis of the articles, comprises a drum (10) having a plurality of axially extending channel shaped grooves (12) around its periphery. The rod-like articles are fed sequentially to the grooves, and as the drum rotates, the articles are delivered in a single layer to the conveyor. The drum can be wide enough to hold two articles in each groove and then alternate grooves have a stop (30) positioned approximately half way. With an article fed to each groove two rows of articles will be delivered to the conveyor. Small holes (38) can be formed in the bottom of the groove, to permit suction to be applied to the grooves. Following placement of the conveyor, the tubes can be divided into lots of predetermined number, advanced to a holding position, and then filled into a box.

## Description

This invention relates to a rotating feed apparatus for rod-like articles, and is particularly for feeding filter tipped cigarette tubes received from an axial feed supply to a laterally moving conveyor. Particular it is intended to feed the tubes in a single layer onto the conveyor.

Cigarette tubes are formed by rolling a long strip of paper into a tube, glue being applied along one edge to cause an overlap to bond. Filter members are deposited on the paper strip at predetermined intervals. Also, if desired, a cork or similar length of material is applied to what is to be the outside of the tube, at positions for the filters. Normally the production is continuous and in effect the tubes are formed "back-to-back", being cut at the centre point in the length of the filter.

Conventionally, the separated tubes drop onto conveyors, fed between laterally spaced tide walls, which form channels. The tubes are then fed into large portable hoppers which in turn are positioned on a further machine. Here the tubes fall from the bottom of the hopper into boxes.

Due to the unbalanced nature of filter tipped tubes, it is a problem that tubes do not fall correctly onto the conveyors. They can be damaged and also cause other problems.

In a modification, the tubes can be lifted from the channels manually and dropped into boxes. Again, any incorrectly orientated tubes can cause problems.

It is desirable that when the tubes are fed onto a conveyor, the tubes should "rest" against each other without pyramiding or bunching. This is particularly so for satisfactory operation of packaging arrangements. If the movement of the tubes is not controlled, the unbalanced nature of the filter tipped tubes causes undesirable misorientation of the tubes. As an example, tubes can become turned by 20° to 30°, inclined across the conveyor.

In one embodiment of the present invention, the tubes are fed from the tube-making apparatus, after cutting into individual tubes, to a rotating drum-like feeding member. A plurality of axially extending grooves are formed in the periphery of the drum. Normally the grooves have a length somewhat longer than two tubes, and alternate grooves have a stop member adjacent the mid-point in their length. The tubes are fed into successive grooves, one tube positioned in a first part of a groove, against a stop, the next tube positioned in the further part of the next groove. This pattern repeats.

As the drum rotates, a flap member extends around the periphery holding the tubes in the grooves. At, or near, the bottom of rotation, the tubes fall out onto the conveyor. The conveyor is divided into two side-by-side portions, by a divider.

Holes can be formed in the bottom of the grooves, and a pneumatic suction applied at the inlet side of the drum to slow down the speed of the tubes in the grooves. The suction is applied for the upper rear portion of the periphery. A further, high flow suction is applied to the ends of the grooves at the side of the drum remote from the inlet. This ensures that the tubes in the further parts of the grooves are against a rim of the drum.

In a further embodiment of the invention, there is provided advancing means for moving a predetermined number of tubes to a holding position and means for transferring the tubes at the holding position into a packaging member.

The invention will be readily understood by the following description of certain embodiments, by way of example, in conjunction with the accompanying drawings, in which:
Figure 1 it a front view on one form of a drum member;
Figure 2 is a side view of a drum member, in the direction of arrow A in Figure 1;
Figure 3 is a cross-section on the line 3-3 of Figure 2, to a larger scale, at the inlet side of the drum, illustrating a suction arrangement;
Figure 4 is a cross-section to a larger scale of part of a drum on the line 4-4 of Figure 1;
Figure 5 diagrammatically illustrates, in plan form, one form of packaging apparatus for packing tubes into a box;
Figure 6 is a side view in the direction of arrow 6 in Figure 5; and
Figures 7 and 8 are end views illustrating the operation of receptacle or containment members for receiving tubes and accepting of box or similar member.

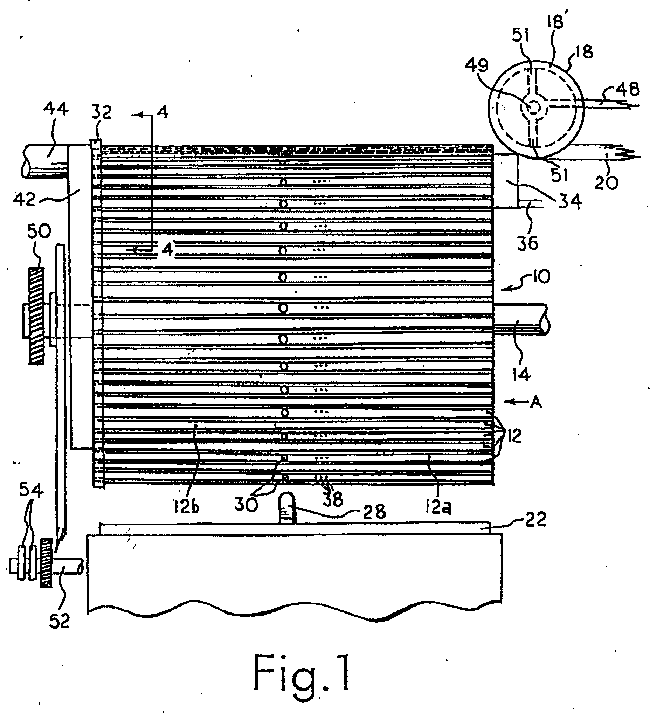

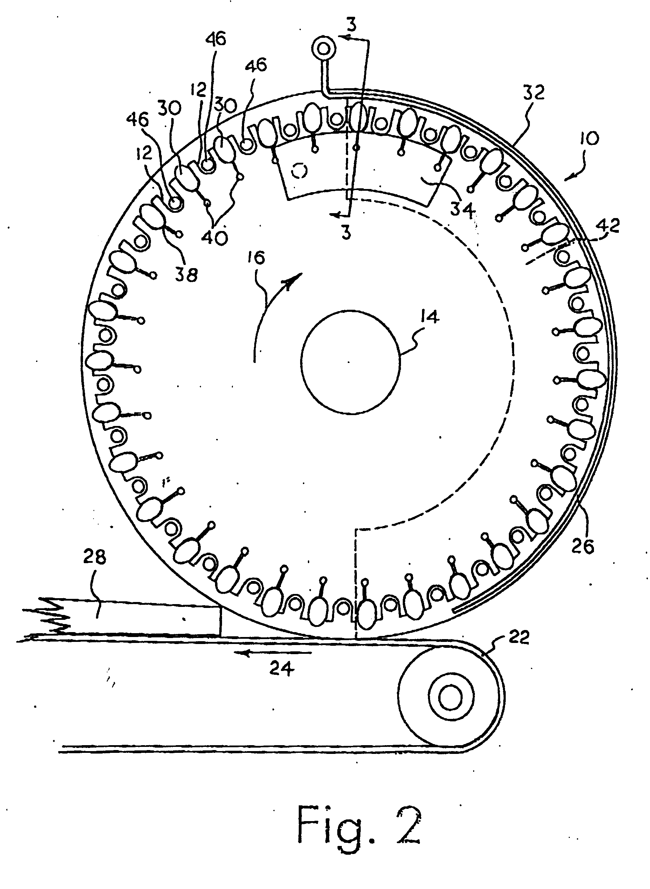

In Figures 1 and 2, a rotatable drum 10 has a plurality of axially extending channel-shaped grooves 12, at the periphery. The grooves have a semi-circular profile to suit the tubes to be fed. The drum is mounted on shaft 14 for rotation as indicated by the arrow 16.

In Figure 1 is shown a feed wheel 18, which feeds the individual tubes from a supply tube 20 which is at the end of the tube-making apparatus, not shown.

Beneath the drum 10 is a conveyor 22 moving at indicated by the arrow 24. A flap 26 extends around the rear of the drum. A dividing member 28 is positioned over the conveyor.

In the example, and as seen in Figure 2, alternate grooves 12 have a stop 30 positioned adjacent the mid-point. Each stop is positioned such that its peripheral edge nearest the feed wheel 18 is at the centre point, or slightly towards the feed wheel. The stops divided alternate grooves into two parts, 12a and 12b in Figure 1. In operation, as the drum revolves, tubes are fed by the wheel 18 into the grooves. One tube will go, for example, into a groove having a stop. In this case, the tube moves to the stop and is held in part 12a. The tube fed to the next groove will move right across the groove and will be positioned against a rim 32, aligned with the part 12b of adjacent grooves.

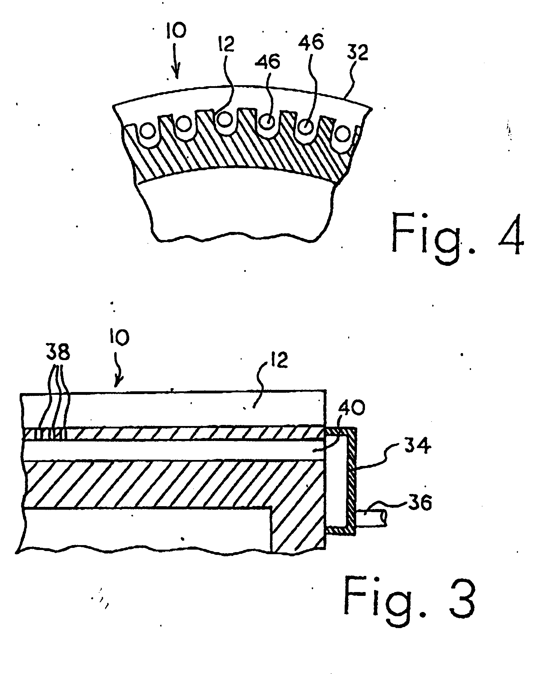

At the upper part of the periphery of the drum, at the inlet end, in sliding contact with the drum side surface, is a channel member 34 open in the side in contact with the drum. A suction connection is made at 36. A suction is applied to holes 38 formed in the bottom of the grooves via axial bores 40 beneath the grooves 1 (Fig. 3). A further channel member 42 is in sliding contact with the rim 32. This member can extend for the majority of the rear periphery of the drum and creates a high flow of air along the grooves to ensure that the tubes in the parts 12a of the grooves are against the rim 32, a suction connection shown at 44.

Figure 3 illustrates an arrangement for applying the suction to the holes 38. Behind each groove 12 is a transverse or axially extending bore 40, with which the holes 38 communicate. The channel member 34 extends for a short arc at a top rear position on the drum. The cross-section of the channel member 34 is shown in Figure 3. The cross-section of channel member 42 is similar to that of channel member 34. The channel member 42 extends at the rear periphery of the drum, as shown in dotted outline in Fig. 2. Figure 4 shows holes 46 in the rim 32 through which air is drawn into the channel member 42.

In a particular arrangement, the wheel 18 propels the tubes at a slightly faster speed than that at which they are fed through tube 20. This ensures a slight separation between the ends of successive tubes, reducing possibility of damage.

As the wheel 18 feeds the tubes, the drum is rotating. Spiral grooves 18' are formed in the periphery of the wheel 18 so that a sideways or lateral motion is given to the tube, in addition to the axial movement, so that the tubes enter the groove 12 smoothly and without damage. A suction can be applied to the grooves 18' in the wheel 18 to ensure propelling of the tubes by the wheel. As an example, suction can be applied via pipe 48 via a central bore 49 and radial connections 51.

The drum is rotated via a toothed belt gear 50, driven by toothed belts, not shown, from a drive shaft. A further shaft 52, having a rotation related to that of the shaft 12 and thus of the drum 10, carries cam members 54 which can be used to actuate counters, via switches 56, relating to the number of tubes delivered to the conveyor 22. At the drum rotates, the tubes fall sequentially onto the moving conveyor 22 in a single layer, a layer on each side of the divider 28. As the drum approaches quite near to the conveyor, the tubes are correctly orientated across the conveyor.

The speed relationship between the drum and the conveyor 22 is important, to ensure that the tubes fall on the conveyor in a single layer and resting against each other to ensure that the tubes extend across the conveyor with axes normal to the direction of movement of the conveyor. Therefore, the rotation of the drum is such that the tubes are discharged, or fall, from the drum to form the single layer, in immediate adjacent positions. If the drum is too fast relative to the conveyor then tubes will form more than one layer, at least at times. Similarly, if the drum is too slow, gaps will occur between tubes, and tubes can become misaligned.

The description above is specific to cigarette tubes but it can very well be appreciated that the apparatus can feed other rod-like members. Also, although a drum having the facility to feed two rows of tubes onto a conveyor has been described, it is possible to feed only one row. In this case there is no need for the stop 30.

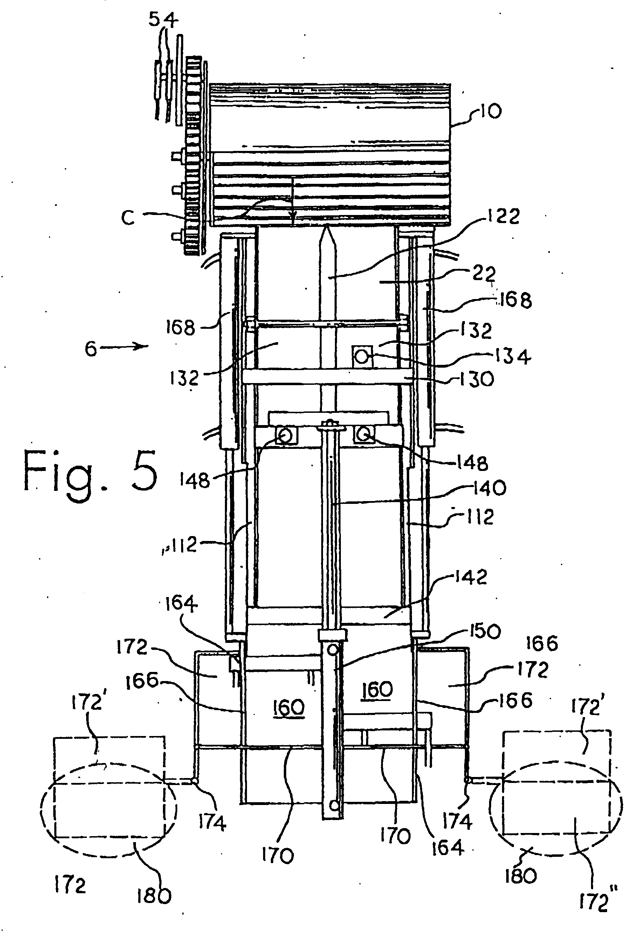

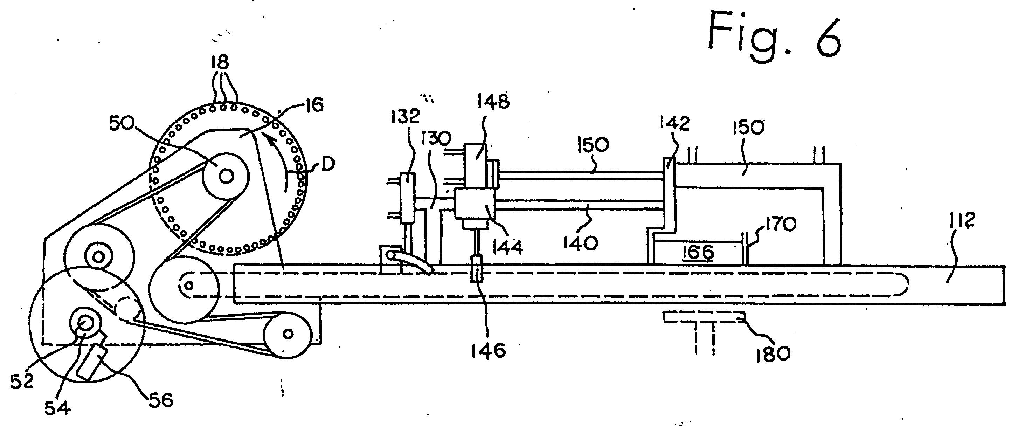

Figures 5 and 6 diagrammatically illustrate one form of packing apparatus, for packing tubes on conveyor 22 into boxes. A support base 110 mounts a framework having spaced apart parallel frame members 112. Between the frame members 112 is mounted the conveyor 22. In Figure 6 is shown the feed drum 10, positioned over one end of the conveyor.

The conveyor 22 moves as indicated by the arrow C of Figure 5, and the drum 10 rotates as indicated by arrow D, Figure 6. Cigarette tubes are fed to the top of the drum, into the axially extending grooves 12 in the drum periphery and are carried round and dropped in a single layer on the conveyor. Curved flap 32 extends round the rear of the drum to ensure the cigarette tubes remain in the grooves, as illustrated in Figure 2.

In the example of Figures 5 and 6, two rows of tubes are deposited on the conveyor, which is divided into two sections by a central divider 122. A support member 130, pivotally mounts a split pivoted flap 132. The flap is actuated by an actuator 134, for example a pneumatic piston, and is divided laterally into two parts, a part on each side of the divider 122. The lower end of the flap is pivoted down to just clear the conveyor when the actuator 134 is operated.

Next in line along the conveyor is a central rod 140 supported at one end from the frame members 112 by support member 130 and at the other end by support 142. Slidably mounted on the rod 140, by means of a central member 144, are two pusher members 146. The pusher members are vertically moved, up and down, by actuators, for example pneumatic rams 148. The central member 144, with the pusher members 146, is reciprocated along the rod 140, for example by pneumatic ram 150.

Staring generally at the support 142 there is defined an accumulating or holding position, indicated at 160, one on each side of the divider. The divider 122 ends at the support 142 and in the centre are positioned two laterally movable ejecting members 162. The ejecting members are reciprocated outwardly in the example by pneumatic rams 164. The side frame members 112 are reduced in height at the holding positions and the gaps filled by blocking members 166 which reciprocate back and forth, being actuated by, for example, pneumatic rams 168. The rear walls of the holding positions are defined by static walls 170. The holding positions are dimensioned to hold a predetermined number of cigarette tubes, for example, two hundred.

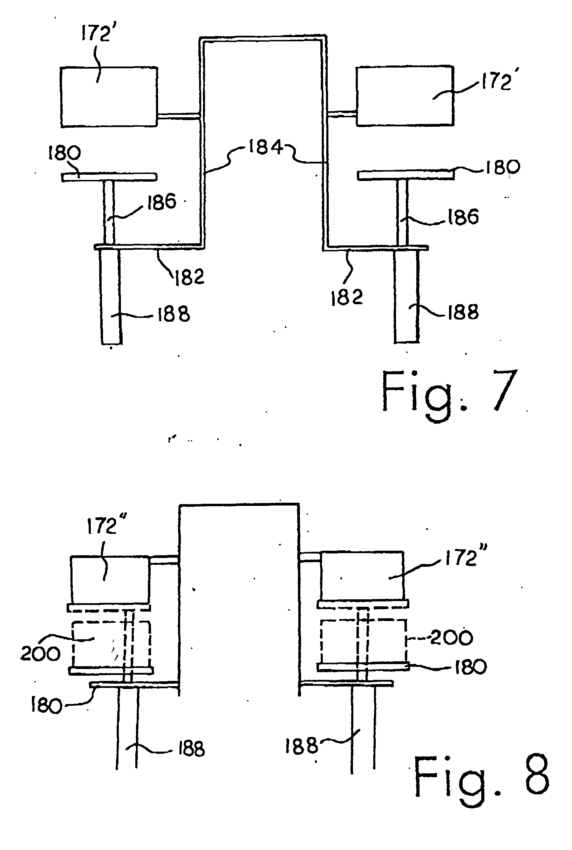

Illustrated in Figure 5, and also Figures 7 and 8, is one form of transfer means and containment means. Pivotally mounted on the frame member 112, adjacent the wall 170, are trough-shaped containment members 172. The trough members are open at one side, facing towards the holding positions. The trough members can pivot outwardly about a pivot axis 174. The trough members can also be rotated about a horizontal axis extending laterally, whereby any articles in a trough member will fall out through, the open side. A first, pivotal position, is shown in dotted outline in 172' and a second, rotated position, is shown in dotted outline at 172''.

Positioned below the outward pivoted and rotated position of the member 172 is a vertically movable table 180, indicated in dotted outline in Figure 6 and seen more clearly in Figures 7 and 8. The tables 180 are mounted on brackets 182 extending from frame 184. The tables are mounted on rods 186 vertically reciprocated, for example, by cylinders 188.

The actuation is typically as follows. The tubes are pushed laterally, by the injecting members 162, into the containment member 172. Once the injecting members have pushed the tubes into the containment members, the containment members rotate to bring the open side uppermost. The containment member then pivots round to 172'. An empty box is positioned over the containment member and then the containment member, with the box and tubes, rotates so that the containment member open side is now downwards - position 172''.

The tables 180 have elevated as in Figure 7, as the containment members, and boxes pivot round. The tables are such a height that as the containment members rotated down, the boxes rest on the tables. The tables move down and the boxes, filled with tubes, move from the containment member. The boxes are shown at 200 in Figure 8.

While the containment members are pivoting and rotating, the injecting members 162 retract, the blocking members 166 move to close off the sides of the holding positions, the pusher members 146 have retracted and the pivoted flap is in the up position, for a further supply of tubes.

## Claims

1. Apparatus for feeding rod-like articles from an axial direction feed to a conveyor moving in a direction normal to said axial direction, comprising a drum mounted for rotation about an axis normal to said conveyor and parallel to said axial direction feed; a plurality of axially extending grooves in the periphery of said drum; means for feeding said rod-like articles from said axial direction feed sequentially to said grooves, at an upper position on said drum, means for rotating said drum, and flap means extending around the periphery of said drum, in the direction of rotation of said drum, substantially from said upper position to a lower position adjacent said conveyor.

2. Apparatus as claimed in claim 1, including a circumferential rim around the periphery of said drum at the opposite side to said means for feeding said articles, and having closed ends of said groove at said opposite side.

3. Apparatus as claimed in claim 1, including a stop member in alternate ones of said grooves, and optionally including apertures extending inwardly from the bottoms of said grooves together with means for applying a suction to said apertures.

4. Apparatus as claimed in claim 3, said means for applying a suction comprising axial holes in said drum, a hole behind each groove, said apertures connecting to said holes, said holes extending to apertures in the side of the drum adjacent to said means for feeding said articles, and optionally including a channel-shaped member in sliding contact with said side off said drum, and connecting to said apertures in the side of the drum, and means for connecting a suction to said channel member.

5. Apparatus as claimed in claim 1, for packing unfilled cigarette tubes into a receptacle, said apparatus including:
advancing means for moving a predetermined number of cigarette tubes along said conveyor;
holding means in operative association with said advancing means for accumulating said predetermined number to be packed into a concentrated volume; and
transfer means for transferring said concentrated volume of tubes into said receptacle.

6. Apparatus as claimed in claim 5, said advancing means including reciprocating means mounted over said conveyor to push said predetermined number of said cigarette tubes to said holding means, and said transfer means including an ejector member to move said cigarette tubes at said holding means laterally into a containment member, and further including a blocking member at an open side of said holding means to close said holding means while accumulating said cigarette tubes, and means for reciprocating moving said blocking member from a closed position to an open position for said lateral movement of said cigarette tubes.

7. Apparatus as claimed in claim 6, said containment member comprising a trough-shaped member having a lateral open side for positioning adjacent to said holding means, and means rotatably mounting said containment member for rotation about a vertical axis away from said holding means, and further including means for pivotally mounting said containment member about a horizontal axis to move said open side to a downward facing position, to fill a receptacle, and optionally including a vertically reciprocal table mounted below said containment member, and means for moving said table to an upward position closely adjacent said containment member when said open side is in said downward facing position to receive said receptacle, and for moving said table to a lower position with said filled receptacle.

8. A method of feeding cigarette tubes from an axial direction feed to a conveyor moving in a direction normal to aid axial direction, comprising:
feeding said tubes singly in said axial direction into sequential ones of axially extending grooves in the periphery of a rotatable drum;
rotating said drum to move said cigarette tubes round and down to said conveyor while retaining said cigarette tubes in said grooves;
releasing cigarette tubes at a lower position to fall on said conveyor in a single layer with said cigarette tubes immediately adjacent to each other.

9. A method as claimed in claim 8, including providing a stop midway along alternate grooves, whereby two rows of cigarette tubes are positioned around said drum, and including causing a flow of air along each groove without a stop to ensure tubes move two ends of said grooves.

10. A method as claim in claim 8, including feeding said cigarette tubes from a supply tube to said grooves by a feed wheel having feed grooves and optionally including giving said cigarette tubes both an axial movement and a sideways movement by said feed wheel.
